(19) **Europäisches Patentamt European Patent Office Office européen des brevets**

(11) **EP 4 629 343 A1**

(12) **EUROPEAN PATENT APPLICATION**
published in accordance with Art. 153(4) EPC

(43) Date of publication:
08.10.2025 Bulletin 2025/41

(21) Application number: 23897448.9

(22) Date of filing: 10.11.2023

(51) International Patent Classification (IPC):
*H01M 4/62* (2006.01)  *C08F 220/10* (2006.01)
*H01M 4/136* (2010.01)  *H01M 4/1397* (2010.01)

(52) Cooperative Patent Classification (CPC):
**C08F 220/10; H01M 4/136; H01M 4/1397;
H01M 4/62; Y02E 60/10**

(86) International application number:
**PCT/JP2023/040629**

(87) International publication number:
**WO 2024/116796 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.11.2022 JP 2022192130

(71) Applicant: **Zeon Corporation**
**Tokyo 100-8246 (JP)**

(72) Inventor: **KAWAMURA, Takaki**
**Tokyo 100-8246 (JP)**

(74) Representative: **Maiwald GmbH**
**Elisenhof**
**Elisenstraße 3**
**80335 München (DE)**

(54) **BINDER COMPOSITION FOR NONAQUEOUS SECONDARY BATTERY ELECTRODES, SLURRY COMPOSITION FOR NONAQUEOUS SECONDARY BATTERY POSITIVE ELECTRODES, POSITIVE ELECTRODE FOR NONAQUEOUS SECONDARY BATTERIES, AND NONAQUEOUS SECONDARY BATTERY**

(57) Provided is a binder composition for a non-aqueous secondary battery electrode that contains a particulate polymer restricted from excessively swelling in electrolyte solution and that can form an electrode having excellent peel strength. The binder composition for a non-aqueous secondary battery electrode contains a particulate polymer. The particulate polymer includes a (meth)acrylic acid ester monomer unit in a proportion of not less than 50 mass% and not more than 83 mass% and includes a styrene unit in a proportion of not less than 7 mass% and not more than 33 mass%. **In** tensile testing of a dry thin film formed using the binder composition for a non-aqueous secondary battery electrode, tensile stress at 100% elongation of the dry thin film is 10 MPa or less and maximum elongation of the dry thin film is 300% or more.

EP 4 629 343 A1

**Description**

TECHNICAL FIELD

The present disclosure relates to a binder composition for a non-aqueous secondary battery electrode, a slurry composition for a non-aqueous secondary battery positive electrode, a positive electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery such as a lithium ion secondary battery normally includes a current collector and an electrode mixed material layer formed on the current collector. The electrode mixed material layer is formed, for example, through application and drying on the current collector of a slurry composition that has an electrode active material, a binder composition containing a polymer serving a role as a binder, and so forth dispersed in a dispersion medium.

In order to further improve the performance of secondary batteries, attempts have been made in recent years to improve binder compositions used in electrode mixed material layer formation.

As one specific example, Patent Literature (PTL) 1 discloses a binder for a lithium ion secondary battery electrode that is obtained through emulsion polymerization of specific monomers in the presence of a surfactant and that has a glass-transition temperature of 30°C or lower. According to PTL 1, this binder is of a water-dispersible type, displays good binding capacity among an active material and between the active material and a current collector, and also has charge/discharge high-temperature cycle characteristics.

CITATION LIST

Patent Literature

PTL 1: JP2011-243464A

SUMMARY

(Technical Problem)

However, an electrode formed using the conventional binder composition described above leaves room for improvement in terms of further increasing close adherence between an electrode mixed material layer and a current collector (i.e., peel strength of an electrode). Moreover, in the conventional binder composition described above, it would be desirable to restrict excessive swelling in electrolyte solution of the polymer that is contained as a binder (i.e., to reduce the degree of swelling in electrolyte solution of a particulate polymer).

Accordingly, one object of the present disclosure is to provide a binder composition for a non-aqueous secondary battery electrode that contains a particulate polymer restricted from excessively swelling in electrolyte solution and that can form an electrode having excellent peel strength.

Another object of the present disclosure is to provide a slurry composition for a non-aqueous secondary battery positive electrode that contains a particulate polymer restricted from excessively swelling in electrolyte solution and that can form a positive electrode having excellent peel strength.

Yet another object of the present disclosure is to provide a positive electrode for a non-aqueous secondary battery that has excellent peel strength and a non-aqueous secondary battery that includes this positive electrode.

(Solution to Problem)

The inventor conducted diligent investigation with the aim of solving the problems set forth above. The inventor discovered that with a binder composition that contains a particulate polymer having a specific chemical composition and that in tensile testing of a dry thin film formed using the binder composition, results in tensile stress at 100% elongation of the dry thin film being not more than a specific value and maximum elongation of the dry thin film being not less than a specific value, excessive swelling of the particulate polymer in electrolyte solution is restricted, and an electrode can be caused to display excellent peel strength. In this manner, the inventor completed the present disclosure.

Specifically, the present disclosure aims to advantageously solve the problems set forth above, and, according to the present disclosure, binder compositions for a non-aqueous secondary battery electrode according to the following (1) to (3), slurry compositions for a non-aqueous secondary battery positive electrode according to the following (4) to (7), a positive electrode for a non-aqueous secondary battery according to the following (8), and a non-aqueous secondary battery according to the following (9) are provided.

(1) A binder composition for a non-aqueous secondary battery electrode comprising a particulate polymer, wherein the particulate polymer includes a (meth)acrylic acid ester monomer unit in a proportion of not less than 50 mass% and not more than 83 mass% and includes a styrene unit in a proportion of not less than 7 mass% and not more than 33 mass%, and in tensile testing of a dry thin film formed using the binder composition for a non-aqueous secondary battery electrode, tensile stress at 100% elongation of the dry thin film is 10 MPa or less and maximum elongation of the dry thin film is 300% or more.

In the case of a particulate polymer that has a specific chemical composition and that is contained in a binder composition that results in tensile stress at 100% elongation of a dry thin film (hereinafter, also referred to simply as "tensile stress at 100% elongation") being not more than the value set forth above and maximum elongation of the dry thin film being not less than the value set forth in this manner, this particulate polymer is restricted from excessively swelling in electrolyte solution. Moreover, this binder composition enables good production of an electrode having excellent peel strength.

Note that in the present disclosure, "(meth)acryl" is used to indicate "acryl" and/or "methacryl".

Moreover, the "tensile stress at 100% elongation" and the "maximum elongation" of a dry thin film referred to in the present disclosure can be measured by a method described in the EXAMPLES section of the present specification.

Furthermore, a "monomer unit" of a polymer referred to in the present disclosure means a "repeating unit derived from the monomer that is included in a polymer obtained using the monomer".

Also note that the "proportional content (mass%)" of each monomer unit (each repeating unit) included in a polymer that is referred to in the present disclosure can be measured by a nuclear magnetic resonance (NMR) method such as $^1$H-NMR or $^{13}$C-NMR.

(2) The binder composition for a non-aqueous secondary battery electrode according to the foregoing (1), wherein the particulate polymer has a volume-average particle diameter of not less than 70 nm and not more than 200 nm.

By using a binder composition containing a particulate polymer that has a volume-average particle diameter within the range set forth above, it is possible to further improve peel strength of an electrode and also reduce internal resistance of a secondary battery.

Note that the "volume-average particle diameter" of a particulate polymer referred to in the present disclosure is the particle diameter (D50) at which cumulative volume calculated from a small diameter end in a particle size distribution (by volume) measured by laser diffraction reaches 50% and, more specifically, can be measured by a method described in the EXAMPLES section of the present specification.

(3) The binder composition for a non-aqueous secondary battery electrode according to the foregoing (1) or (2), wherein the particulate polymer further includes an acidic group-containing monomer unit in a proportion of not less than 1 mass% and not more than 6 mass%.

When the particulate polymer further includes an acidic group-containing monomer unit in the specific proportion set forth above, dispersibility of a slurry composition can be increased, and peel strength of an electrode can be further improved.

(4) A slurry composition for a non-aqueous secondary battery positive electrode comprising: the binder composition for a non-aqueous secondary battery electrode according to any one of the foregoing (1) to (3); and a positive electrode active material.

Through a slurry composition that contains any one of the binder compositions set forth above and a positive electrode active material, it is possible to produce a positive electrode having excellent peel strength.

(5) The slurry composition for a non-aqueous secondary battery positive electrode according to the foregoing (4), wherein the positive electrode active material includes olivine-type lithium iron phosphate.

By using olivine-type lithium iron phosphate as the positive electrode active material, it is possible to improve stability against overcharging of a secondary battery.

(6) The slurry composition for a non-aqueous secondary battery positive electrode according to the foregoing (4) or (5), further comprising a water-soluble polymer.

When the slurry composition further contains a water-soluble polymer, dispersibility of the slurry composition can be increased, and peel strength of an electrode can be further improved.

Note that the term "water-soluble polymer" as used in the present disclosure means a polymer that results in less than 1.0 mass% of insoluble content when 0.5 g (in terms of solid content) of the polymer is dissolved in 100 g of water at a temperature of 25°C.

(7) The slurry composition for a non-aqueous secondary battery positive electrode according to any one of the foregoing (4) to (6), further comprising a conductive material, wherein the conductive material includes either or both of one or more carbon nanotubes and a particulate conductive material.

Through a slurry composition that contains either or both of carbon nanotubes and a particulate conductive material as a conductive material, it is possible to improve flexibility of an electrode mixed material layer and also to reduce internal resistance of a secondary battery.

Note that the term "particulate conductive material" as used in the present disclosure means a conductive material having an aspect ratio of less than 10 as measured using a transmission electron microscope (TEM). Also note that the aspect ratio of carbon nanotubes is normally 10 or more and that carbon nanotubes are considered to not be included among "particulate conductive materials" in the present disclosure.

(8) A positive electrode for a non-aqueous secondary battery comprising a positive electrode mixed material layer formed using the slurry composition for a non-aqueous secondary battery positive electrode according to any one of the foregoing (4) to (7).

A positive electrode that includes a positive electrode mixed material layer obtained using any one of the slurry compositions set forth above in this manner has excellent peel strength.

(9) A non-aqueous secondary battery comprising the positive electrode for a non-aqueous secondary battery according to the foregoing (8).

A secondary battery that includes the positive electrode for a non-aqueous secondary battery set forth above in this manner has reduced internal resistance and excellent battery characteristics, for example.

(Advantageous Effect)

According to the present disclosure, it is possible to provide a binder composition for a non-aqueous secondary battery electrode that contains a particulate polymer restricted from excessively swelling in electrolyte solution and that can form an electrode having excellent peel strength.

Moreover, according to the present disclosure, it is possible to provide a slurry composition for a non-aqueous secondary battery positive electrode that contains a particulate polymer restricted from excessively swelling in electrolyte solution and that can form a positive electrode having excellent peel strength.

Furthermore, according to the present disclosure, it is possible to provide a positive electrode for a non-aqueous secondary battery that has excellent peel strength and a non-aqueous secondary battery that includes this positive electrode.

DETAILED DESCRIPTION

The following provides a detailed description of embodiments of the present disclosure.

A presently disclosed binder composition for a non-aqueous secondary battery electrode can be used in the formation of an electrode of a non-aqueous secondary battery such as a lithium ion secondary battery, and, in particular, can suitably be used in the formation of a positive electrode (positive electrode for a non-aqueous secondary battery). In other words, the presently disclosed binder composition may be a binder composition for a non-aqueous secondary battery positive electrode that is used in the formation of a positive electrode or may be a binder composition for a non-aqueous secondary battery negative electrode that is used in the formation of a negative electrode, but is preferably a binder composition for a non-aqueous secondary battery positive electrode. Moreover, a presently disclosed slurry composition for a non-aqueous secondary battery positive electrode contains the presently disclosed binder composition for a non-aqueous secondary battery electrode and can be used in the formation of a positive electrode for a non-aqueous secondary battery. Furthermore, a feature of a presently disclosed positive electrode for a non-aqueous secondary battery is that it includes a positive electrode mixed material layer formed from the presently disclosed slurry composition for a non-aqueous secondary battery positive electrode. Also, a feature of the presently disclosed non-aqueous secondary battery is that it includes a positive electrode for a non-aqueous secondary battery that has been produced using the presently disclosed slurry composition for a non-aqueous secondary battery positive electrode.

(Binder composition for non-aqueous secondary battery electrode)

The presently disclosed binder composition contains a particulate polymer and optionally further contains a dispersion medium and other components.

Features of the presently disclosed binder composition are that the aforementioned particulate polymer includes a (meth)acrylic acid ester monomer unit in a proportion of not less than 50 mass% and not more than 83 mass% and includes a styrene unit in a proportion of not less than 7 mass% and not more than 33 mass%, and that in tensile testing of a dry thin film formed using the binder composition, tensile stress at 100% elongation of the dry thin film is 10 MPa or less and maximum elongation of the dry thin film is 300% or more.

As a result of the presently disclosed binder composition containing a particulate polymer that has the specific chemical composition set forth above and as a result of a dry thin film that is formed using the binder composition having a tensile stress at 100% elongation that is not more than the value set forth above and a maximum elongation that is not less than the value set forth above, excessive swelling of the particulate polymer in electrolyte solution is restricted, and an electrode can be caused to display excellent peel strength. Although it is not certain why the above-described effects are achieved by using this binder composition, the reason is presumed to be as follows.

Firstly, the particulate polymer that is contained in the binder composition includes a (meth)acrylic acid ester monomer unit in a specific proportion. The (meth)acrylic acid ester monomer unit has a function of preserving flexibility of the particulate polymer while also imparting extensibility to the particulate polymer. In addition, a feature of the presently disclosed binder composition is that in tensile testing of a dry thin film formed from the binder composition, tensile stress at 100% elongation of the dry thin film is 10 MPa or less and maximum elongation of the dry thin film is 300% or more. The presence of the (meth)acrylic acid ester monomer unit in the particulate polymer and the low tensile stress and high maximum elongation of a dry thin film such as described above are thought to act synergistically to enable the particulate polymer to readily deform and cause good adhesion among an electrode active material in an electrode mixed material layer obtained using a slurry composition that contains the presently disclosed binder composition while also enabling strong close adherence of the electrode active material to a current collector (i.e., enabling improvement of peel strength of an electrode).

On the other hand, studies conducted by the inventor have revealed that when the proportional content of a (meth)acrylic acid ester monomer unit in a particulate polymer is too high, the particulate polymer excessively swells in electrolyte solution (i.e., the particulate polymer has an excessively high degree of swelling in electrolyte solution), which results in dissolution of the particulate polymer in the electrolyte solution. In response thereto, the particulate polymer that is contained in the presently disclosed binder composition includes a styrene unit in a specific proportion. The styrene unit is thought to have a function of restricting swelling of the particulate polymer in electrolyte solution and thereby suppressing an increase of the degree of swelling in electrolyte solution of the particulate polymer due to the (meth)acrylic acid ester monomer unit.

Accordingly, excessive swelling in electrolyte solution of the particulate polymer of the presently disclosed binder composition is restricted, and an electrode having excellent peel strength can be produced well by using the presently disclosed binder composition.

<Particulate polymer>

The particulate polymer is a component that functions as a binder and that in an electrode mixed material layer formed on a current collector using a slurry composition that contains the binder composition, holds components such as an electrode active material that are contained in the electrode mixed material layer so that these components are not shed from the electrode mixed material layer.

Note that the "particulate polymer" is a polymer that can be dispersed in an aqueous medium such as water and that is present in a particulate form in the aqueous medium. Moreover, the particulate polymer typically has an insoluble content of 90 mass% or more when 0.5 g of the particulate polymer is dissolved in 100 g of water at 25°C.

The particulate polymer includes a (meth)acrylic acid ester monomer unit and a styrene unit in specific proportions and can optionally further include an acidic group-containing monomer unit. Note that the particulate polymer may include repeating units other than the (meth)acrylic acid ester monomer unit, the styrene unit, and the acidic group-containing monomer unit (hereinafter, referred to as "other repeating units").

<<(Meth)acrylic acid ester monomer unit>>

Examples of (meth)acrylic acid ester monomers that can form the (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; acrylic acid alkoxy esters such as 2-methoxyethyl acrylate and 2-ethoxyethyl acrylate; methacrylic acid alkyl esters such as methyl methacrylate, ethyl methacrylate, n-propyl methacrylate, isopropyl methacrylate, n-butyl methacrylate, t-butyl methacrylate, isobutyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate; and methacrylic acid alkoxy esters such as 2-methoxyethyl methacrylate and 2-ethoxyethyl methacrylate. Of these (meth) acrylic acid ester monomers, (meth)acrylic acid alkyl esters are preferable from a viewpoint of even further reducing the degree of swelling in electrolyte solution of the particulate polymer while also further improving peel strength of an electrode, methyl acrylate, n-butyl acrylate, isobutyl acrylate, and 2-ethylhexyl acrylate are more preferable, and n-butyl acrylate is even more preferable. Note that one (meth)acrylic acid ester monomer may be used individually, or two or more (meth)acrylic acid ester monomers may be used in combination.

Also note that in the present disclosure, a hydroxy group-containing (meth)acrylic acid ester monomer unit is considered to be included among the subsequently described "hydroxy group-containing monomer unit" rather than being included among the "(meth)acrylic acid ester monomer unit".

The proportional content of the (meth)acrylic acid ester monomer unit in the particulate polymer used herein when the amount of all repeating units (all monomer units) in the particulate polymer is taken to be 100 mass% is required to be not less than 50 mass% and not more than 83 mass%. Moreover, the proportional content of the (meth)acrylic acid ester monomer unit in the particulate polymer is preferably 60 mass% or more, more preferably 65 mass% or more, even more preferably 68 mass% or more, further preferably 70 mass% or more, and particularly preferably 72 mass% or more, and is preferably 80 mass% or less, and more preferably 79.5 mass% or less. In a situation in which the proportional content of the (meth)acrylic acid ester monomer unit in the particulate polymer is less than 50 mass%, peel strength of an electrode decreases due to reduction of flexibility of the particulate polymer. On the other hand, in a situation in which the proportional content of the (meth)acrylic acid ester monomer unit in the particulate polymer is more than 83 mass%, affinity of the particulate polymer with electrolyte solution becomes excessively high, and the degree of swelling in electrolyte solution of the particulate polymer increases. This also reduces dispersibility of a slurry composition due to flexibility of the particulate polymer increasing more than necessary and viscosity of the slurry composition increasing. In addition, internal resistance of a secondary battery increases as a result of coverage of an electrode active material by the particulate polymer (or a polymer derived from the particulate polymer) increasing in an electrode mixed material layer that is formed using the slurry composition.

<<Styrene unit>>

The styrene unit is a structural unit that is derived from styrene.

The proportional content of the styrene unit in the particulate polymer used herein when the amount of all repeating units (all monomer units) in the particulate polymer is taken to be 100 mass% is required to be not less than 7 mass% and not more than 33 mass%. Moreover, the proportional content of the styrene unit in the particulate polymer is preferably 10 mass% or more, more preferably 14 mass% or more, and even more preferably 17.5 mass% or more, and is preferably 30 mass% or less, more preferably 26 mass% or less, even more preferably 24 mass% or less, and particularly preferably 22 mass% or less. In a situation in which the proportional content of the styrene unit in the particulate polymer is less than 7 mass%, affinity of the particulate polymer with electrolyte solution becomes excessively high, and the degree of swelling in electrolyte solution of the particulate polymer increases. This also reduces dispersibility of a slurry composition due to flexibility of the particulate polymer increasing more than necessary and viscosity of the slurry composition increasing. In addition, internal resistance of a secondary battery increases as a result of coverage of an electrode active material by the particulate polymer (or a polymer derived from the particulate polymer) increasing in an electrode mixed material layer that is formed using the slurry composition. On the other hand, in a situation in which the proportional content of the styrene unit in the particulate polymer is more than 33 mass%, peel strength of an electrode decreases due to reduction of flexibility of the particulate polymer, and internal resistance of a secondary battery increases because it becomes difficult to form electrical conduction paths in an electrode mixed material layer formed using a slurry composition.

<<Acidic group-containing monomer unit>>

Examples of acidic group-containing monomers that can form the acidic group-containing monomer unit that is optionally included in the particulate polymer include carboxy group-containing monomers, sulfo group-containing monomers, and phosphate group-containing monomers. Note that an acidic group of the acidic group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth) allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the above-described acidic group-containing monomers may be used individually, or two or more of the above-described acidic group-containing monomers may be used in combination. Moreover, from a viewpoint of increasing dispersibility of a slurry composition and also further improving peel strength of an electrode, carboxy group-containing monomers are preferable, monocarboxylic acids and dicarboxylic acids are more preferable, itaconic acid, methacrylic acid, and acrylic acid are even more preferable, and itaconic acid and methacrylic acid are particularly preferable as acidic group-containing monomers that can form the acidic group-containing monomer unit.

Note that in a case in which the particulate polymer includes an acidic group-containing monomer unit, the proportional content of the acidic group-containing monomer unit in the particulate polymer when the amount of all repeating units (all monomer units) in the particulate polymer is taken to be 100 mass% is preferably 1 mass% or more, and more preferably 2 mass% or more, and is preferably 6 mass% or less, and more preferably 5 mass% or less. When the proportional content of the acidic group-containing monomer unit in the particulate polymer is 1 mass% or more, particles of the particulate polymer repel each other through electrostatic interactions, and dispersibility of a slurry composition can be increased. Moreover, peel strength of an electrode can be further improved because the particulate polymer can adhere well to an electrode active material (particularly graphite or an electrode active material having a surface that is at least partially covered by a carbon coating layer) through electrostatic interactions. On the other hand, when the proportional content of the acidic group-containing monomer unit in the particulate polymer is 6 mass% or less, aggregation of the particulate polymer in water can be inhibited, and dispersibility of a slurry composition can be increased.

<<Other repeating units>>

No specific limitations are placed on other repeating units that can optionally be included in the particulate polymer. Examples of such other repeating units include a hydroxy group-containing monomer unit, a nitrile group-containing monomer unit, a cross-linkable monomer unit, an aliphatic conjugated diene monomer unit, and an alkylene structural unit. Note that the particulate polymer may include one type of other repeating unit or may include two or more types of other repeating units. Moreover, it is preferable that the particulate polymer includes a hydroxy group-containing monomer unit.

Examples of hydroxy group-containing monomers that can form the hydroxy group-containing monomer unit include hydroxy group-containing (meth)acrylic acid ester monomers and hydroxy group-containing (meth)acrylamide monomers.

Examples of hydroxy group-containing (meth)acrylic acid ester monomers include 2-hydroxymethyl acrylate, 2-hydroxyethyl acrylate, 2-hydroxypropyl acrylate, 2-hydroxybutyl acrylate, 2-hydroxymethyl methacrylate, 2-hydroxyethyl methacrylate, 2-hydroxypropyl methacrylate, and 2-hydroxybutyl methacrylate.

Examples of hydroxy group-containing (meth)acrylamide monomers include N-hydroxymethylacrylamide, N-hydroxyethylacrylamide, N-hydroxypropylacrylamide, N-hydroxymethylmethacrylamide, N-hydroxyethylmethacrylamide, and N-hydroxypropylmethacrylamide.

Of these hydroxy group-containing monomers, hydroxy group-containing (meth)acrylic acid ester monomers are preferable, and 2-hydroxyethyl acrylate is more preferable.

In a case in which the particulate polymer includes a hydroxy group-containing monomer unit, the proportional content of the hydroxy group-containing monomer unit in the particulate polymer when the amount of all repeating units (all monomer units) in the particulate polymer is taken to be 100 mass% is preferably 0.1 mass% or more, and more preferably 0.5 mass% or more, and is preferably 10 mass% or less, more preferably 5 mass% or less, and even more preferably 2.5 mass% or less.

Examples of nitrile group-containing monomers that can form the nitrile group-containing monomer unit include $\alpha,\beta$-ethylenically unsaturated nitrile monomers such as acrylonitrile and methacrylonitrile. Of these nitrile group-containing monomers, acrylonitrile is preferable.

Note that the proportional content of the nitrile group-containing monomer unit in the particulate polymer when the amount of all repeating units (all monomer units) in the particulate polymer is taken to be 100 mass% is preferably 20 mass% or less, more preferably 10 mass% or less, even more preferably 5 mass% or less, further preferably 1 mass% or less, and particularly preferably 0 mass% (i.e., it is particularly preferable that the particulate polymer does not include a nitrile group-containing monomer unit) from a viewpoint of even further reducing the degree of swelling in electrolyte solution of the particulate polymer.

Examples of cross-linkable monomers that can form the cross-linkable monomer unit include monomers having two or more polymerizable double bonds (for example, olefinic double bonds) per molecule; and monomers having a thermally cross-linkable group (epoxy group, N-methylolamide group, oxazoline group, allyl group, etc.) and one double bond (for example, an olefinic double bond) per molecule.

The proportional content of the cross-linkable monomer unit in the particulate polymer when the amount of all repeating units (all monomer units) in the particulate polymer is taken to be 100 mass% is preferably 3 mass% or less, more preferably 1 mass% or less, even more preferably 0.1 mass% or less, and particularly preferably 0 mass% (i.e., it is particularly preferable that the particulate polymer does not include a cross-linkable monomer unit) from a viewpoint of further improving peel strength of an electrode while also reducing internal resistance of a secondary battery.

Examples of aliphatic conjugated diene monomers that can form the aliphatic conjugated diene monomer unit include conjugated diene compounds such as 1,3-butadiene, isoprene, 2,3-dimethyl-1,3-butadiene, and 1,3-pentadiene. Moreover, the alkylene structural unit is a repeating unit that is composed of only an alkylene structure represented by a general formula: $-C_nH_{2n}-$ (n is an integer of 2 or more). Furthermore, the alkylene structural unit may be a structural unit obtained through hydrogenation of an aliphatic conjugated diene monomer unit that is derived from an aliphatic conjugated diene monomer such as described above.

Note that the total proportional content of the aliphatic conjugated diene monomer unit and the alkylene structural unit in the particulate polymer when the amount of all repeating units (monomer units and structural units) in the particulate polymer is taken to be 100 mass% is preferably 3 mass% or less, more preferably 1 mass% or less, even more preferably 0.1 mass% or less, and particularly preferably 0 mass% (i.e., it is particularly preferable that the particulate polymer does not include an aliphatic conjugated diene monomer unit and an alkylene structural unit) from a viewpoint of further improving peel strength of an electrode while also reducing internal resistance of a secondary battery.

<<Properties of particulate polymer>>

[Volume-average particle diameter]

The volume-average particle diameter of the particulate polymer is preferably 70 nm or more, more preferably 80 nm or more, and even more preferably 90 nm or more, and is preferably 200 nm or less, more preferably 170 nm or less, even more preferably 140 nm or less, and particularly preferably 130 nm or less. When the volume-average particle diameter of the particulate polymer is 70 nm or more, adhesion area between the particulate polymer and an electrode active material increases, and peel strength of an electrode can be further improved. On the other hand, when the volume-average particle diameter of the particulate polymer is 200 nm or less, peel strength of an electrode can be further improved, an excessive increase of adhesion area between the particulate polymer and an electrode active material can be suppressed, and internal resistance of a secondary battery can be reduced.

Note that the volume-average particle diameter of the particulate polymer can be adjusted by altering the type or amount of a monomer, an emulsifier, and/or a polymerization initiator that is used to produce the particulate polymer, for example.

The particulate polymer may be particles having a monophase structure formed from a single polymer or may be particles having a heterophase structure formed through physical or chemical bonding of two or more different polymers. Specific examples of heterophase structures include a core-shell structure in which spherical particles each have a central portion (core portion) and an outer shell (shell portion) that are formed from different polymers; and a side-by-side structure in which two or more polymers are arranged alongside one another. The particulate polymer that is contained in the presently disclosed binder composition is preferably monophase structure particles from a viewpoint of even further reducing the degree of swelling in electrolyte solution of the particulate polymer while also further improving peel strength of an electrode.

<<Production method of particulate polymer>>

The particulate polymer described above can be produced by any of solution polymerization, suspension polymerization, bulk polymerization, emulsion polymerization, or the like, for example, without any specific limitations. The polymerization method may be, for example, addition polymerization such as ionic polymerization, radical polymerization, or living radical polymerization. Note that the polymerization can be carried out with a commonly used polymerization initiator, polymerization accelerator, emulsifier, dispersant, chain transfer agent, or the like, and the amount thereof can also be the same as commonly used. In particular, emulsion polymerization performed using water as a polymerization solvent is preferable because a solvent removal operation is not required and because of high solvent safety.

Note that in a case in which water is used as a polymerization solvent and in which the above-described monomer composition is polymerized in water to produce a water dispersion containing the particulate polymer, it is preferable that the pH of the water dispersion is adjusted to not lower than 7 and not higher than 9 after polymerization. This is because it is easier to obtain good viscosity stability of a slurry composition when the obtained water dispersion is neutralized so as to adjust the pH to within the range set forth above.

No specific limitations are placed on polymerization initiators that can be used in production of the particulate polymer, and a known polymerization initiator such as sodium persulfate, ammonium persulfate, potassium persulfate, or t-butyl peroxy-2-ethylhexanoate, for example, may be used. Of these polymerization initiators, potassium persulfate is preferable. One polymerization initiator may be used individually, or two or more polymerization initiators may be used in combination in a freely selected ratio. Moreover, the additive amount of the polymerization initiator is preferably 0.1 parts by mass or more, and more preferably 0.2 parts by mass or more relative to 100 parts by mass, in total, of all monomers used in production of the particulate polymer from a viewpoint of further improving peel strength of an electrode and reducing internal resistance of a secondary battery. No specific limitations are placed on the upper limit for the additive amount of the polymerization initiator. For example, the upper limit can be set as 2 parts by mass or less, or can be set as 1 part by mass or less relative to 100 parts by mass, in total, of all monomers used in production of the particulate polymer.

Moreover, no specific limitations are placed on emulsifiers that can be used in production of the particulate polymer, and a known emulsifier such as an anionic surfactant (sodium dodecylbenzenesulfonate, sodium lauryl sulfate, sodium dialkyl sulfosuccinate, etc.) or a non-ionic surfactant (polyoxyethylene nonylphenyl ether, polyethylene glycol monostearate, sorbitan monostearate, etc.), for example, may be used. Of these emulsifiers, sodium lauryl sulfate is preferable. One emulsifier may be used individually, or two or more emulsifiers may be used in combination in a freely selected ratio.

<Dispersion medium>

The dispersion medium that is optionally contained in the presently disclosed binder composition is not specifically limited, but preferably includes water. For example, the presently disclosed binder composition may contain just water as the dispersion medium. Alternatively, the dispersion medium may be a mixture of water and an organic solvent (for example, an ester, a ketone, or an alcohol). Note that the presently disclosed binder composition may contain one type of organic solvent or may contain two or more types of organic solvents.

<Other components>

Besides the components described above, the presently disclosed binder composition may contain a reinforcing material, a leveling agent, a wetting agent, a dispersant, a viscosity modifier, an additive for electrolyte solution, a preservative, a fungicide, a defoamer, a polymerization inhibitor, and a binder other than the above-described particulate polymer. Commonly known examples of such components can be used without any specific limitations so long as they do not affect battery reactions. One other component may be used individually, or two or more other components may be used in combination in a freely selected ratio.

<<Properties of binder composition>>

[Tensile stress at 100% elongation]

In tensile testing of a dry thin film formed using the presently disclosed binder composition, the tensile stress at 100% elongation of the dry thin film (tensile stress at 100% elongation) is required to be 10 MPa or less, and is preferably 8.5 MPa or less, more preferably 7 MPa or less, even more preferably 6 MPa or less, further preferably 5 MPa or less, and particularly preferably 4 MPa or less. In a situation in which the tensile stress at 100% elongation of the dry thin film is more than 10 MPa, peel strength of an electrode decreases. Moreover, it becomes difficult to form electrical conduction paths in an electrode mixed material layer formed using a slurry composition, and internal resistance of a secondary battery increases. The tensile stress at 100% elongation of the dry thin film is preferably 0.5 MPa or more, more preferably 1 MPa or more, even more preferably 2 MPa or more, and particularly preferably 2.5 MPa or more. When the tensile stress at 100% elongation of the dry thin film is 0.5 MPa or more, the degree of swelling in electrolyte solution of the particulate polymer can be even further reduced, and dispersibility of a slurry composition can also be increased. Moreover, internal resistance of a secondary battery can be reduced.

Note that the "tensile stress at 100% elongation" of the dry thin film can be adjusted by altering the type or amount of a monomer, a polymerization initiator, and/or an emulsifier used in production of the particulate polymer, for example. Specifically, the tensile stress at 100% elongation of the dry thin film can be reduced by increasing the amount of a (meth)acrylic acid ester monomer that is used in production of the particulate polymer or by reducing the amount of styrene that is used in production of the particulate polymer. The tensile stress at 100% elongation of the dry thin film can also be reduced by reducing the amount of a cross-linkable monomer and/or an aliphatic conjugated diene monomer that is used in production of the particulate polymer.

[Maximum elongation]

In tensile testing of a dry thin film formed using the presently disclosed binder composition, the maximum elongation of the dry thin film is required to be 300% or more, and is preferably 350% or more, more preferably 400% or more, even more preferably 480% or more, and particularly preferably 550% or more. In a situation in which the maximum elongation of the dry thin film is less than 300%, peel strength of an electrode decreases. Moreover, it becomes difficult to form electrical conduction paths in an electrode mixed material layer formed using a slurry composition, and internal resistance of a secondary battery increases. The maximum elongation of the dry thin film is preferably 1,500% or less, more preferably 1,000% or less, even more preferably 850% or less, further preferably 700% or less, and particularly preferably 600% or less. When the maximum elongation of the dry thin film is 1,500% or less, the degree of swelling in electrolyte solution of the particulate polymer can be even further reduced, and dispersibility of a slurry composition can also be increased. Moreover, internal resistance of a secondary battery can be reduced.

Note that the "maximum elongation" of the dry thin film can be adjusted by altering the type or amount of a monomer, a polymerization initiator, and/or an emulsifier used in production of the particulate polymer, for example. Specifically, the maximum elongation of the dry thin film can be increased by increasing the amount of a (meth)acrylic acid ester monomer that is used in production of the particulate polymer or by reducing the amount of styrene that is used in production of the particulate polymer. The maximum elongation of the dry thin film can also be increased by reducing the amount of a cross-linkable monomer and/or an aliphatic conjugated diene monomer that is used in production of the particulate polymer.

<Production of binder composition for non-aqueous secondary battery electrode>

The presently disclosed binder composition can be produced by mixing the above-described components by a known method. Specifically, the binder composition can be produced by mixing the above-described components using a mixer such as a ball mill, a sand mill, a bead mill, a pigment disperser, a grinding machine, an ultrasonic disperser, a homogenizer, a planetary mixer, or a FILMIX.

Note that in a situation in which the particulate polymer has been produced through polymerization in an aqueous solvent, the particulate polymer can be mixed while still in the form of a water dispersion to produce a binder composition containing water as a dispersion medium.

(Slurry composition for non-aqueous secondary battery positive electrode)

The presently disclosed slurry composition is a composition that is used in an application of forming a positive electrode of a secondary battery, that contains a positive electrode active material and the binder composition set forth above, and that optionally further contains a water-soluble polymer, a conductive material, and other components. For example, the presently disclosed slurry composition normally contains a positive electrode active material, a particulate polymer, and water serving as a dispersion medium, and may optionally further contain a water-soluble polymer, a conductive material, and other components. Moreover, the presently disclosed slurry composition can cause a positive electrode to display excellent peel strength as a result of the presently disclosed slurry composition containing the binder composition set forth above.

<Positive electrode active material>

The positive electrode active material is a material that gives and receives electrons in a positive electrode of a secondary battery. Known positive electrode active materials can be used without any specific limitations as the positive electrode active material that is contained in the presently disclosed slurry composition.

Specifically, the positive electrode active material may be a compound that includes a transition metal such as a transition metal oxide, a transition metal sulfide, or a complex metal oxide of lithium and a transition metal, for example. Examples of the transition metal include Ti, V, Cr, Mn, Fe, Co, Ni, Cu, and Mo.

Examples of the transition metal oxide include $MnO$, $MnO_2$, $V_2O_5$, $V_6O_{13}$, $TiO_2$, $Cu_2V_2O_3$, amorphous $V_2O$-$P_2O_5$, amorphous $MoO_3$, amorphous $V_2O_5$, and amorphous $V_6O_{13}$.

Examples of the transition metal sulfide include $TiS_2$, $TiS_3$, amorphous $MoS_2$, and FeS.

Examples of the complex metal oxide of lithium and a transition metal include a lithium-containing complex metal oxide having a layered structure, a lithium-containing complex metal oxide having a spinel structure, and a lithium-containing complex metal oxide having an olivine structure.

The lithium-containing complex metal oxide having a layered structure may be lithium-containing cobalt oxide ($LiCoO_2$), lithium-containing nickel oxide ($LiNiO_2$), a lithium-containing complex oxide of Co-Ni-Mn ($Li(Co\ Mn\ Ni)O_2$), a lithium-containing complex oxide of Ni-Mn-Al, a lithium-containing complex oxide of Ni-Co-Al, a solid solution of $LiMaO_2$ and $Li_2MbO_3$, or the like, for example. Note that the lithium-containing complex oxide of Co-Ni-Mn may be $Li[Ni_{0.5}Co_{0.2}Mn_{0.3}]O_2$, $Li[Ni_{1/3}Co_{1/3}Mn_{1/3}]O_2$, or the like. The solid solution of $LiMaO_2$ and $Li_2MbO_3$ may be $xLiMaO_2 \cdot (1-x)Li_2MbO_3$ or the like, for example, where x represents a number satisfying $0 < x < 1$, Ma represents one or more transition metals having an average oxidation state of 3+, and Mb represents one or more transition metals having an average oxidation state of 4+. Examples of solid solutions such as described above include $Li[Ni_{0.17}Li_{0.2}Co_{0.07}Mn_{0.56}]O_2$.

The term "average oxidation state" as used in the present specification refers to an average oxidation state of the "one or more transition metals" and is calculated from the molar quantities and the valences of the transition metals. For example, in a case in which the "one or more transition metals" are composed of 50 mol% of $Ni^{2+}$ and 50 mol% of $Mn^{4+}$, the average oxidation state of the "one or more transition metals" is $(0.5) \times (2+) + (0.5) \times (4+) = 3+$.

The lithium-containing complex metal oxide having a spinel structure may be lithium manganate ($LiMn_2O_4$) or a compound in which some of the Mn in lithium manganate ($LiMn_2O_4$) has been substituted for another transition metal, for example. One specific example thereof is $Li_8[Mn_{2-t}Mc_t]O_4$, such as $LiNi_{0.5}Mn_{1.5}O_4$, where Mc represents one or more transition metals having an average oxidation state of 4+, specific examples of which include Ni, Co, Fe, Cu, and Cr, t represents a number satisfying $0 < t < 1$, and s represents a number satisfying $0 \leq s \leq 1$. Note that a lithium-rich spinel compound represented by $Li_{1+x}Mn_{2-x}O_4$ ($0 < x < 2$) can also be used as the positive electrode active material.

The lithium-containing complex metal oxide having an olivine structure may be an olivine-type lithium phosphate compound represented by $Li_yMdPO_4$, such as olivine-type lithium iron phosphate ($LiFePO_4$), olivine-type lithium manganese phosphate ($LiMnPO_4$), or olivine-type lithium manganese iron phosphate ($LiMn_{1-x}Fe_xPO_4$; $0 < x < 1$), where Md represents one or more transition metals having an average oxidation state of 3+, examples of which include Mn, Fe, and Co, and y represents a number satisfying $0 \leq y \leq 2$. Moreover, in the olivine-type lithium phosphate compound represented by $Li_yMdPO_4$, some of Md may be substituted for another metal. Examples of possible substituting metals include Cu, Mg, Zn, V, Ca, Sr, Ba, Ti, Al, Si, B, and Mo.

Of the examples described above, olivine-type lithium iron phosphate is preferable from a viewpoint of improving stability against overcharging of a secondary battery.

The olivine-type lithium iron phosphate can be carbon coating layer-covered olivine-type lithium iron phosphate particles in which surfaces of olivine-type lithium iron phosphate particles are at least partially covered by a carbon coating layer. By using carbon coating layer-covered olivine-type lithium iron phosphate particles as the positive electrode active material, it is possible to further improve peel strength of a positive electrode because the particulate polymer can adhere well to the carbon coating layer through electrostatic interactions.

No specific limitations are placed on the method by which the outer surface of the olivine-type lithium iron phosphate particles is covered by the carbon coating layer, and a known method can be adopted.

The proportion constituted by olivine-type lithium iron phosphate in the positive electrode active material when the total amount of the positive electrode active material is taken to be 100 mass% is preferably 80 mass% or more, more preferably 90 mass% or more, and even more preferably 95 mass% or more.

<Binder composition>

The presently disclosed binder composition set forth above that contains a particulate polymer and a dispersion medium and that optionally contains other components, for example, is used as the binder composition.

Note that the content of the previously described particulate polymer in the slurry composition is preferably 0.2 parts by mass or more, more preferably 0.4 parts by mass or more, and even more preferably 0.6 parts by mass or more in terms of solid content per 100 parts by mass of the positive electrode active material from a viewpoint of further improving peel strength of a positive electrode. Moreover, the content of the particulate polymer in the slurry composition is preferably 10 parts by mass or less, more preferably 5 parts by mass or less, and even more preferably 2 parts by mass or less in terms of solid content per 100 parts by mass of the positive electrode active material from a viewpoint of reducing internal resistance of a secondary battery.

<Water-soluble polymer>

The water-soluble polymer that can optionally be contained in the presently disclosed slurry composition is a component that enables good dispersion of compounded components such as the previously described particulate polymer in the aqueous medium. Accordingly, the inclusion of the water-soluble polymer in the slurry composition can increase dispersibility of the slurry composition and can also further improve peel strength of a positive electrode by optimizing the structure of a positive electrode mixed material layer that is formed using the slurry composition.

Note that the water-soluble polymer may be in the form of a salt (salt of a water-soluble polymer). In other words, the term "water-soluble polymer" as used in the present disclosure also encompasses salts of the water-soluble polymer.

The water-soluble polymer includes a hydrophilic group. Examples of hydrophilic groups that can be included in the water-soluble polymer include a carboxy group, a sulfo group, a phosphate group, and a hydroxy group. The water-soluble polymer may include just one of these types of hydrophilic groups or may include two or more of these types of hydrophilic groups.

Moreover, of these examples, a carboxy group and a hydroxy group are preferable as hydrophilic groups from a viewpoint of increasing dispersibility of the slurry composition and further improving peel strength of a positive electrode.

A cellulosic polymer, a synthetic polymer, or the like, for example, can be used as the water-soluble polymer.

Examples of cellulosic polymers that may be used include cellulose compounds such as carboxymethyl cellulose (CMC), carboxyethyl cellulose, ethyl cellulose, hydroxymethyl cellulose, hydroxypropyl cellulose, and carboxyethyl methyl cellulose, and salts of these cellulose compounds such as ammonium salts and alkali metal salts.

Examples of synthetic polymers that may be used include polycarboxylic acids such as polyacrylic acid, polymethacrylic acid, and alginic acid; polyvinyl alcohol; and other polymers that include a hydrophilic group-containing monomer unit (other polymers). One of these water-soluble polymers may be used individually, or two or more of these water-soluble polymers may be used in combination in a freely selected ratio. Of these water-soluble polymers, carboxymethyl cellulose and other polymers are preferable from a viewpoint of increasing dispersibility of the slurry composition while also further improving peel strength of a positive electrode.

The following provides a detailed description of one example of the chemical composition of a polymer including a hydrophilic group-containing monomer unit as a water-soluble polymer that is a synthetic polymer.

The water-soluble polymer that is a polymer including a hydrophilic group-containing monomer unit is a polymer that includes a hydrophilic group-containing monomer unit and that optionally includes other repeating units. The hydrophilic group-containing monomer unit may be an "acidic group-containing monomer unit" or a "hydroxy group-containing monomer unit" such as previously described in the "Particulate polymer" section. Note that one type of hydrophilic group-containing monomer unit may be used individually, or two or more types of hydrophilic group-containing monomer units may be used in combination in a freely selected ratio.

The water-soluble polymer preferably includes both a hydroxy group-containing monomer unit and an acidic group-containing monomer unit as the hydrophilic group-containing monomer unit. Moreover, the hydroxy group-containing monomer unit is preferably a hydroxy group-containing (meth)acrylic acid ester monomer unit, and more preferably a 2-hydroxyethyl acrylate unit or a 2-hydroxyethyl methacrylate unit. Furthermore, the acidic group-containing monomer unit is preferably a carboxy group-containing monomer unit, and more preferably an acrylic acid unit.

The proportional content of the hydrophilic group-containing monomer unit in the water-soluble polymer when the amount of all repeating units in the water-soluble polymer is taken to be 100 mass% is preferably 50 mass% or more, more preferably 60 mass% or more, even more preferably 70 mass% or more, and particularly preferably 80 mass% or more. When the proportional content of the hydrophilic group-containing monomer unit in the water-soluble polymer is 50 mass% or more, stability of the slurry composition can be increased and coating density can be improved, and it is also possible to inhibit aggregation of the particulate polymer, etc. during application of the slurry composition and to improve flexibility of a positive electrode including a positive electrode mixed material layer. Note that although no specific limitations are placed on the upper limit for the proportional content of the hydrophilic group-containing monomer unit in the water-soluble polymer, the upper limit when the amount of all repeating units in the water-soluble polymer is taken to be 100 mass% can be set as 100 mass% or less, or can be set as 95 mass% or less.

Moreover, the proportional content of the hydroxy group-containing monomer unit in the water-soluble polymer when the amount of all repeating units in the water-soluble polymer is taken to be 100 mass% is preferably 40 mass% or more, more preferably 50 mass% or more, even more preferably 60 mass% or more, and particularly preferably 70 mass% or more. When the proportional content of the hydroxy group-containing monomer unit in the water-soluble polymer is 40 mass% or more, stability of the slurry composition can be increased and coating density can be improved, and it is also possible to inhibit aggregation of the particulate polymer, etc. during application of the slurry composition and to improve flexibility of a positive electrode including a positive electrode mixed material layer. Note that although no specific limitations are placed on the upper limit for the proportional content of the hydroxy group-containing monomer unit in the water-soluble polymer, the upper limit when the amount of all repeating units in the water-soluble polymer is taken to be 100 mass% can be set as 100 mass% or less, can be set as 95 mass% or less, or can be set as 90 mass% or less.

The proportional content of the acidic group-containing monomer unit in the water-soluble polymer when the amount of all repeating units in the water-soluble polymer is taken to be 100 mass% is preferably 1 mass% or more, more preferably 2.5 mass% or more, and even more preferably 5 mass% or more. When the proportional content of the acidic group-containing monomer unit in the water-soluble polymer is 1 mass% or more, stability of the slurry composition can be increased and coating density can be improved, and it is also possible to inhibit aggregation of the particulate polymer, etc. during application of the slurry composition and to improve flexibility of a positive electrode including a positive electrode mixed material layer. Note that although no specific limitations are placed on the upper limit for the proportional content of the acidic group-containing monomer unit in the water-soluble polymer, the upper limit when the amount of all repeating units in the water-soluble polymer is taken to be 100 mass% can be set as 30 mass% or less, can be set as 20 mass% or less, or can be set as 10 mass% or less.

No specific limitations are placed on other repeating units that can optionally be included in the water-soluble polymer. Note that the water-soluble polymer may include one type of other repeating unit or may include two or more types of other repeating units.

Moreover, it is preferable that the particulate polymer includes a (meth)acrylic acid ester monomer unit as another repeating unit. The (meth)acrylic acid ester monomer unit may be any of those that were previously described in the "Particulate polymer" section. In particular, a (meth)acrylic acid alkoxy ester unit is preferable, and a 2-methoxyethyl acrylate unit is more preferable.

The proportional content of the (meth)acrylic acid ester monomer unit in the water-soluble polymer when the amount of all repeating units in the water-soluble polymer is taken to be 100 mass% is preferably 1 mass% or more, and more preferably 5 mass% or more, and is preferably 20 mass% or less, and more preferably 15 mass% or less.

Although the content of the water-soluble polymer in the slurry composition can be adjusted as appropriate to the extent that the desired effects according to the present disclosure are obtained, the content of the water-soluble polymer is preferably 0.1 parts by mass or more, and more preferably 0.5 parts by mass or more in terms of solid content per 100 parts by mass of the positive electrode active material, and is preferably 5 parts by mass or less, and more preferably 3 parts by mass or less in terms of solid content per 100 parts by mass of the positive electrode active material, for example. When the content of the water-soluble polymer in the slurry composition is 0.1 parts by mass or more per 100 parts by mass of the positive electrode active material, dispersibility of the slurry composition can be increased, and peel strength of a positive electrode can be further improved. On the other hand, when the content of the water-soluble polymer in the slurry composition is 5 parts by mass or less per 100 parts by mass of the positive electrode active material, internal resistance of a secondary battery can be reduced.

<<Production method of water-soluble polymer>>

No specific limitations are placed on the production method of the water-soluble polymer. The water-soluble polymer may be produced through modification of a natural polymer such as cellulose through a chemical reaction or may be produced through polymerization of a monomer composition containing monomers such as described above, carried out in an aqueous solvent such as water. The proportional content of each monomer in the monomer composition during production can be set in accordance with the proportional content of each monomer unit in the water-soluble polymer.

Note that no specific limitations are placed on the method by which a hydrophilic group is introduced into a water-soluble polymer that is a synthetic polymer. Although a hydrophilic group may be introduced by producing a polymer through addition polymerization of a hydrophilic group-containing monomer such as described above to obtain a water-soluble polymer that includes a hydrophilic group-containing monomer unit or may be introduced by modifying (for example, terminal modifying) any addition polymer to obtain a water-soluble polymer that includes a hydrophilic group, the former is preferable.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Commonly used additives such as emulsifiers, dispersants, polymerization initiators, polymerization accelerators, and molecular weight modifiers can be used in the polymerization. The amounts of these additives may also be the same as commonly used. The polymerization conditions can be adjusted as appropriate depending on the polymerization method, the type of polymerization initiator, and so forth.

<Conductive material>

The conductive material that can optionally be contained in the presently disclosed slurry composition is a component having a function of ensuring electrical contact among the positive electrode active material in a positive electrode mixed material layer.

It is preferable that either or both of carbon nanotubes and a particulate conductive material are used as the conductive material, and more preferable that carbon nanotubes and a particulate conductive material are used together as the conductive material.

By using carbon nanotubes as the conductive material, it is possible to reduce internal resistance of a secondary battery. Moreover, by using a particulate conductive material as the conductive material, it is possible to improve flexibility of a positive electrode mixed material layer.

Note that conductive materials other than carbon nanotubes and particulate conductive materials (i.e., other conductive materials) may be used as the conductive material. For example, a fibrous conductive material other than carbon nanotubes can be used as another conductive material.

<<Carbon nanotubes>>

Carbon nanotubes can reduce internal resistance of a secondary battery by forming electrical conduction paths in a positive electrode mixed material layer. Moreover, by using carbon nanotubes, it is also possible to improve cycle characteristics and low-temperature characteristics of a secondary battery.

Any carbon nanotubes (hereinafter, also abbreviated as "CNTs") that yield the desired effects according to the present disclosure can be used as the carbon nanotubes without any specific limitations. Carbon nanotubes may be single-walled (SW) carbon nanotubes or multi-walled (MW) carbon nanotubes depending on the wall format thereof. Moreover, the carbon nanotubes that can be used as the conductive material may be single-walled carbon nanotubes, multi-walled carbon nanotubes, or a combination thereof.

The BET specific surface area of the CNTs is preferably 100 $m^2/g$ or more, more preferably 150 $m^2/g$ or more, and even more preferably 200 $m^2/g$ or more, and is preferably 1,000 $m^2/g$ or less, more preferably 700 $m^2/g$ or less, and even more preferably 400 $m^2/g$ or less. When the BET specific surface area of the CNTs is within any of the specific ranges set forth above, internal resistance of a secondary battery can be reduced.

Note that the "BET specific surface area" of CNTs referred to in the present disclosure is the nitrogen adsorption specific surface area measured by the BET method and can, for example, be measured using a BET specific surface area analyzer.

CNTs having the properties described above can be produced by a known method such as arc discharge, laser ablation, or the super growth method without any specific limitations.

Although the content of the CNTs in the slurry composition can be adjusted as appropriate to the extent that the desired effects according to the present disclosure are obtained, the content of the CNTs is preferably 0.01 parts by mass or more in terms of solid content per 100 parts by mass of the positive electrode active material, and is preferably 0.5 parts by mass or less, more preferably 0.3 parts by mass or less, and even more preferably 0.1 parts by mass or less in terms of solid content per 100 parts by mass of the positive electrode active material, for example. When the content of the CNTs in the slurry composition is 0.01 parts by mass or more per 100 parts by mass of the positive electrode active material, internal resistance of a secondary battery can be reduced. On the other hand, when the content of the CNTs in the slurry composition is 0.5 parts by mass or less per 100 parts by mass of the positive electrode active material, sufficiently high flexibility of a positive electrode mixed material layer can be ensured.

<<Particulate conductive material>>

The particulate conductive material is a component that can function as a conductive material in a positive electrode mixed material layer and that can improve flexibility of the positive electrode mixed material layer.

The particulate conductive material may be carbon black (for example, acetylene black, Ketjenblack® (Ketjenblack is a registered trademark in Japan, other countries, or both), or furnace black), graphene, or the like without any specific limitations so long as it is a conductive material having a form other than a fibrous form (for example, a spherical or plate-like form). Of these examples, acetylene black is preferable as the particulate conductive material. Note that one of these particulate conductive materials may be used individually, or two or more of these particulate conductive materials may be used in combination in a freely selected ratio.

Although the content of the particulate conductive material in the slurry composition can be adjusted as appropriate to the extent that the desired effects according to the present disclosure are obtained, the content of the particulate conductive material is preferably 0.1 parts by mass or more, and more preferably 0.5 parts by mass or more in terms of solid content per 100 parts by mass of the positive electrode active material, and is preferably 5 parts by mass or less, and more preferably 2.5 parts by mass or less in terms of solid content per 100 parts by mass of the positive electrode active material, for example. When the content of the particulate conductive material in the slurry composition is 0.1 parts by mass or more per 100 parts by mass of the positive electrode active material, flexibility of a positive electrode mixed material layer can be improved. On the other hand, when the content of the particulate conductive material in the slurry composition is 5 parts by mass or less per 100 parts by mass of the positive electrode active material, peel strength of a positive electrode can be further improved.

<Other components>

Examples of other components that can be contained in the slurry composition include, but are not specifically limited to, the same other components as can be contained in the presently disclosed binder composition. One of these components may be used individually, or two or more of these components may be used in combination in a freely selected ratio.

<Production of slurry composition for non-aqueous secondary battery positive electrode>

The slurry composition set forth above can be produced by mixing the above-described components by a known mixing method. This mixing can be performed using a mixer such as a ball mill, a sand mill, a bead mill, a pigment disperser, a grinding machine, an ultrasonic disperser, a homogenizer, a planetary mixer, or a FILMIX, for example.

(Positive electrode for non-aqueous secondary battery)

The presently disclosed positive electrode for a non-aqueous secondary battery includes a positive electrode mixed material layer that has been formed using the presently disclosed slurry composition set forth above. In general, the presently disclosed positive electrode for a non-aqueous secondary battery includes a current collector and a positive electrode mixed material layer that has been formed on the current collector. The positive electrode mixed material layer is typically a layer formed through drying of the presently disclosed slurry composition, contains at least a positive electrode active material and a polymer derived from the previously described particulate polymer, and optionally contains other components. Note that in the positive electrode mixed material layer, the polymer that is derived from the previously described particulate polymer may have a particulate form (i.e., may still be in the form of a particulate polymer in the positive electrode mixed material layer) or may have any other form.

Moreover, the presently disclosed positive electrode has excellent peel strength as a result of being produced using the presently disclosed slurry composition.

<Formation method of positive electrode>

The presently disclosed positive electrode can be formed by any one of the following methods (1) to (3), for example.

(1) A method in which the presently disclosed slurry composition is applied onto the surface of the current collector and is then dried

(2) A method in which the current collector is immersed in the presently disclosed slurry composition and is then dried

(3) A method in which the presently disclosed slurry composition is applied onto a releasable substrate and is dried to produce a positive electrode mixed material layer that is then transferred onto the surface of the current collector

Of these methods, the above-described method (1) is particularly preferable because it is easy to control the layer thickness of the positive electrode mixed material layer. In more detail, the above-described method (1) includes a step of applying the slurry composition onto the current collector (application step) and a step of drying the slurry composition that has been applied onto the current collector to form a positive electrode mixed material layer on the current collector (drying step).

<<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying can be set as appropriate in accordance with the thickness of the positive electrode mixed material layer to be obtained after drying.

The current collector onto which the slurry composition is applied is a material having electrical conductivity and electrochemical durability. Specifically, the current collector may be made of aluminum or an aluminum alloy. Moreover, aluminum and an aluminum alloy may be used in combination, or different types of aluminum alloys may be used in combination. Aluminum and aluminum alloys are heat resistant and electrochemically stable, and hence serve as excellent current collector materials.

<<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition on the current collector in this manner, it is possible to form a positive electrode mixed material layer on the current collector and thereby obtain a positive electrode for a non-aqueous secondary battery including the current collector and the positive electrode mixed material layer.

After the drying step, the positive electrode mixed material layer may be further subjected to a pressing process such as mold pressing or roll pressing. The pressing process can further improve peel strength of the positive electrode and also enables even further densification of the obtained positive electrode mixed material layer.

(Non-aqueous secondary battery)

The presently disclosed non-aqueous secondary battery is a non-aqueous secondary battery that includes the presently disclosed positive electrode for a non-aqueous secondary battery. More specifically, the presently disclosed non-aqueous secondary battery is a non-aqueous secondary battery that includes a positive electrode, a negative electrode, an electrolyte solution, and a separator and in which the presently disclosed positive electrode for a non-aqueous secondary battery is used as the positive electrode.

Although the following describes, as one example, a case in which the secondary battery is a lithium ion secondary battery, the presently disclosed secondary battery is not limited to the following example.

<Negative electrode>

Examples of negative electrodes that can be used in the lithium ion secondary battery that is an example of the presently disclosed non-aqueous secondary battery include known negative electrodes without any specific limitations. Specifically, a negative electrode that is obtained by forming a negative electrode mixed material layer on a current collector by a known production method can be used as the negative electrode.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent that is used in the electrolyte solution is not specifically limited so long as it is an organic solvent in which the supporting electrolyte can dissolve. Examples of organic solvents that may suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery according to the present disclosure can be produced by, for example, stacking the positive electrode and the negative electrode with the separator in-between, performing rolling, folding, or the like of the resultant stack as necessary according to the battery shape to place the stack in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the examples and comparative examples, the following methods were used to evaluate the volume-average particle diameter and degree of swelling in electrolyte solution of a particulate polymer, the tensile stress and maximum elongation of a dry thin film, the dispersibility of a slurry composition, the peel strength of an electrode (positive electrode), and the internal resistance of a secondary battery.

<Volume-average particle diameter of particulate polymer>

The volume-average particle diameter (D50) of a particulate polymer produced in each example or comparative example was measured by laser diffraction. Specifically, a water dispersion in which the solid content concentration of the particulate polymer was adjusted to 0.1% was measured using a laser diffraction particle size analyzer (produced by Beckman Coulter, Inc.; product name: LS-13320), and the particle diameter at which cumulative volume calculated from a small diameter end in the obtained particle size distribution (by volume) reached 50% was determined as the volume-average particle diameter (nm).

<Degree of swelling in electrolyte solution of particulate polymer>

A water dispersion of a particulate polymer produced in each example or comparative example was loaded into a petri dish made of polytetrafluoroethylene and was dried under conditions of 25°C and 96 hours. Thereafter, vacuum drying was further performed at 60°C for 10 hours to obtain a film of 1.0 mm in thickness. The obtained film was cut to 1 cm-square to obtain a test specimen. The mass M0 of this test specimen was measured. The test specimen was then immersed in electrolyte solution at 60°C for 72 hours. Thereafter, the test specimen was removed from the electrolyte solution, electrolyte solution on the surface of the test specimen was wiped off, and the mass M1 of the test specimen after immersion was measured. The degree of swelling in electrolyte solution (%) was calculated by the following formula and was evaluated by the following standard. A smaller value for the degree of swelling in electrolyte solution indicates that the particulate polymer is restricted from excessively swelling in electrolyte solution. Note that a solution obtained by dissolving $LiPF_6$ as a supporting electrolyte with a concentration of 1 mol/L in a mixed solvent of ethylene carbonate (EC) and ethyl methyl carbonate (EMC) (volume ratio: EC/EMC = 3/7) was used as the electrolyte solution.

$$\text{Degree of swelling in electrolyte solution (\%)} = (M1/M0) \times 100$$

A: Degree of swelling in electrolyte solution of less than 300%
B: Degree of swelling in electrolyte solution of not less than 300% and less than 400%
C: Degree of swelling in electrolyte solution of not less than 400% and less than 500%
D: Degree of swelling in electrolyte solution of 500% or more

<Tensile stress and maximum elongation of dry thin film>

A binder composition produced in each example or comparative example was loaded into a petri dish made of polytetrafluoroethylene and was dried under conditions of 25°C and 96 hours. Thereafter, vacuum drying was further performed at 60°C for 10 hours to obtain a film of 1.0 mm in thickness. The obtained film was punched out with a No. 2 dumbbell shape prescribed in JIS K 6251 2017 to obtain a dry thin film. This dry thin film was subjected to tensile testing using a tensile test machine (produced by Toyo Seiki Seisakusho, Ltd.; product name: STROGRAPH E3-L). First, the dry thin film was set in the tensile test machine, and then slack take-up was performed in software. Thereafter, the dry thin film was stretched in a longitudinal direction of the dry thin film to cause breaking at a tensing rate of 50 mm/min in a 25°C environment. The "elongation (%)" of the dry thin film was calculated by the following formula by taking the length of the dry thin film in the longitudinal direction prior to stretching to be $L_0$ (cm) and taking the length of the stretched dry thin film in the longitudinal direction to be $L_1$ (cm).

$$\text{Elongation (\%)} = \{(L_1 - L_0)/L_0\} \times 100$$

In addition, the "tensile stress (MPa) at 100% elongation" was calculated by the following formula by taking the tensile force applied to the dry thin film at an elongation of 100% to be F (N) and taking the cross-sectional area perpendicular to the tensing direction of the dry thin film prior to stretching to be A (mm$^2$).

$$\text{Tensile stress at 100\% elongation (MPa)} = F\ (N)/A\ (mm^2)$$

Moreover, the "maximum elongation (%)" was determined as the elongation (%) at the point at which breaking of the dry thin film occurred. In other words, the "maximum elongation (%)" was calculated by the following formula by taking the length of the dry thin film in the longitudinal direction prior to stretching to be $L_0$ (cm) and taking the length of the dry thin film in the longitudinal direction at the point at which breaking occurred to be $L_2$ (cm).

$$\text{Maximum elongation (\%)} = \{(L_2 - L_0)/L_0\} \times 100$$

<Dispersibility of slurry composition>

The viscosity of a slurry composition for a positive electrode produced in each example or comparative example was measured in accordance with JIS Z8803:1991 under conditions of a rotation speed of 60 rpm and a temperature of 25°C using a single-cylinder rotational viscometer (Brookfield B-type viscometer) and was confirmed to be within a range of 1,000 mPa·s to 2,000 mPa·s. Dispersibility of the slurry composition for a positive electrode was then evaluated in accordance with the following standard based on the value of the solid content concentration of the slurry composition for a positive electrode having a viscosity in the aforementioned range. Note that a larger value for solid content concentration in the same viscosity range (1,000 mPa·s to 2,000 mPa·s) for the same type of slurry composition indicates that solid content contained in the slurry composition is better dispersed, and thus indicates that the slurry composition has better dispersibility.

A: Solid content concentration of 52% or more
B: Solid content concentration of not less than 50% and less than 52%
C: Solid content concentration of not less than 48% and less than 50%
D: Solid content concentration of less than 48% or not dispersed (no fluidity)

<Peel strength of electrode (positive electrode)>

A positive electrode produced in each example or comparative example was cut out as a rectangle of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and is closely adhered more strongly to the current collector.

A: Peel strength of 10 N/m or more
B: Peel strength of not less than 9 N/m and less than 10 N/m
C: Peel strength of not less than 8 N/m and less than 9 N/m
D: Peel strength of less than 8 N/m

<Internal resistance of secondary battery>

A lithium ion secondary battery produced in each example or comparative example was charged to an SOC (State Of Charge) of 50% at 1C (C is a value expressed by rated capacity (mA)/1 hour (h)) in a 25°C atmosphere.

Thereafter, the lithium ion secondary battery was subjected to 20 seconds of charging and 20 seconds of discharging centered on the SOC of 50% at each of 0.2C, 0.5C, 1.0C, 2.0C, and 3.0C in a 25°C environment. The battery voltage after 20 seconds in each case (charging side and discharging side) was plotted against the current value, and the gradient of this plot was determined as the IV resistance ($\Omega$) (IV resistance during charging and IV resistance during discharging). The obtained IV resistance value ($\Omega$) was evaluated by the following standard. A smaller value for the IV resistance indicates that the lithium ion secondary battery has less internal resistance.

A: IV resistance value of less than 8 $\Omega$
B: IV resistance value of not less than 8 $\Omega$ and less than 10 $\Omega$
C: IV resistance value of not less than 10 $\Omega$ and less than 12 $\Omega$
D: IV resistance value of 12 $\Omega$ or more

(Example 1)

<Production of binder composition>

A 1 L septum-equipped flask (reactor) including a stirrer was charged with 70 parts of deionized water and 0.15 parts of sodium lauryl sulfate as an emulsifier. The gas phase was purged with nitrogen gas, and the temperature was raised to 70°C. Thereafter, a solution of 0.3 parts of potassium persulfate (KPS) as a polymerization initiator dissolved in 10 parts of deionized water was added into the reactor.

Meanwhile, a monomer composition was obtained in a separate vessel (emulsion vessel) by mixing 80 parts of deionized water, 0.45 parts of sodium lauryl sulfate as an emulsifier, 75 parts of n-butyl acrylate as a (meth)acrylic acid ester monomer, 22 parts of styrene, 2 parts of itaconic acid as an acidic group-containing monomer, and 1 part of 2-hydroxyethyl acrylate as a hydroxy group-containing monomer. The monomer composition was continuously added into the 1 L septum-equipped flask over 3 hours to perform polymerization. During addition, the reaction was performed with the temperature held at 70°C. Once the addition was complete, a further 2 hours of stirring was performed at 80°C to yield a water dispersion of a particulate polymer. The water dispersion of the particulate polymer that was obtained in this manner was adjusted to pH 8 through addition of 5% sodium hydroxide aqueous solution to produce a binder composition.

The volume-average particle diameter and degree of swelling in electrolyte solution of the particulate polymer in the obtained binder composition were evaluated. In addition, the tensile stress at 100% elongation and the maximum elongation of a dry thin film formed from the binder composition were also evaluated. The results are shown in Table 1.

<Production of aqueous solution of polymer A>

An aqueous solution of a polymer A as a water-soluble polymer was produced as follows.

A 10 L septum-equipped flask was charged with 770 parts of deionized water. Heating was performed to a temperature of 40°C, and the inside of the flask was purged with nitrogen gas at a flow rate of 100 mL/min. Next, 8 parts of acrylic acid, 75 parts of 2-hydroxyethyl acrylate, and 9 parts of 2-hydroxyethyl methacrylate as hydrophilic group-containing monomers and 8 parts of 2-methoxyethyl acrylate as a (meth)acrylic acid ester monomer were mixed and were injected into the flask using a syringe. Thereafter, 3 parts of a 10.0% aqueous solution of sodium L-ascorbate as a polymerization accelerator was charged to the flask using a syringe, and, 10 minutes later, 38 parts of a 4.0% aqueous solution of potassium persulfate as a polymerization initiator was added into the flask using a syringe. At 1 hour after the start of the reaction, the temperature was raised to 55°C, and the polymerization reaction was caused to proceed. After 2 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 3 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 4 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 5 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 6 hours, a reaction inhibitor was added, and the flask was opened to air to stop the polymerization reaction. The product was subsequently adjusted to pH 8 using an 8% aqueous solution of sodium hydroxide to yield an aqueous solution of a polymer A as a water-soluble polymer.

Note that the chemical composition (proportional content of each monomer unit) of the obtained polymer A was the same as the ratio (charging ratio) of each monomer among all monomers used in polymerization of the polymer A.

Moreover, the obtained polymer A was water-soluble according to the definition in the present specification.

<Production of CNT dispersion liquid>

A CNT dispersion liquid having a solid content concentration of 1% was produced by using a disper blade to stir (3,000 rpm, 10 minutes) 0.4 parts of carbon nanotubes (BET specific surface area: 250 $m^2$/g) as a conductive material, 0.6 parts (in terms of solid content) of carboxymethyl cellulose (produced by Daicel Corporation; product name: DAICEL 1220) as a water-soluble polymer, and 99 parts of deionized water, and subsequently using a bead mill in which zirconia beads of 1 mm in diameter were used to perform 1 hour of mixing at a circumferential speed of 8 m/s.

<Production of acetylene black dispersion liquid>

An acetylene black dispersion liquid having a solid content concentration of 5% was produced by using a disper blade to stir (3,000 rpm, 60 minutes) 4.4 parts of acetylene black as a conductive material, 0.6 parts (in terms of solid content) of carboxymethyl cellulose (produced by Daicel Corporation; product name: DAICEL 1220) as a water-soluble polymer, and 95 parts of deionized water.

<Production of slurry composition for positive electrode>

After adding together 96.5 parts of carbon coating layer-covered olivine-type lithium iron phosphate particles (average particle diameter: 1 $\mu$m) as a positive electrode active material, 1.0 parts (in terms of solid content) of the aqueous solution of the polymer A obtained as described above, and deionized water, these materials were adjusted to a solid content concentration of 78% and were mixed (60 rpm, 50 minutes) in a planetary mixer.
Next, the acetylene black dispersion liquid obtained as described above was added such that the additive amount of acetylene black was 1.2 parts and was mixed (60 rpm, 10 minutes) in the planetary mixer. Next, the CNT dispersion liquid obtained as described above was added such that the additive amount of carbon nanotubes was 0.05 parts and was mixed (60 rpm, 10 minutes) in the planetary mixer. Finally, 1.0 parts (in terms of solid content) of the binder composition produced as described above was added and was mixed (40 rpm, 10 minutes) in the planetary mixer to produce a slurry composition for a positive electrode. Note that in production of the slurry composition for a positive electrode, the viscosity of the obtained slurry composition for a positive electrode (measured by single-cylinder rotational viscometer (Brookfield B-type viscometer) in accordance with JIS Z8803:1991; temperature: 25°C; rotation speed: 60 rpm) was adjusted to within a range of 1,000 mPa·s to 2,000 mPa·s through addition of water.
Dispersibility of the obtained slurry composition for a positive electrode was evaluated. The result is shown in Table 1.

<Formation of positive electrode>

The slurry composition for a positive electrode produced as described above was applied onto aluminum foil of 20 $\mu$m in thickness serving as a current collector by a comma coater such as to have a coating weight after drying of 23 mg/cm$^2$. The applied slurry composition was dried by conveying the aluminum foil inside of a 60°C oven for 2 minutes at a speed of 0.5 m/min. Thereafter, 2 minutes of heat treatment was performed at 120°C to obtain a positive electrode web. The positive electrode web was rolled by roll pressing to obtain a positive electrode having a positive electrode mixed material layer density of 4.0 g/cm$^3$.
The peel strength of the obtained positive electrode was evaluated. The result is shown in Table 1.

<Formation of negative electrode>

A slurry composition for a negative electrode was produced by stirring 98 parts of spherical artificial graphite (volume-average particle diameter: 12 $\mu$m) as a negative electrode active material, 1 part of styrene butadiene rubber (number-average particle diameter: 180 nm; glass-transition temperature: 10°C) as a binder, 1 part of carboxymethyl cellulose as a thickener, and an appropriate amount of water in a planetary mixer.
The slurry composition for a negative electrode was applied onto copper foil of 15 $\mu$m in thickness serving as a current collector by a comma coater such as to have a coating weight after drying of 11 mg/cm$^2$. The applied slurry composition was dried by conveying the copper foil inside of a 60°C oven for 2 minutes at a speed of 0.5 m/min. Thereafter, 2 minutes of heat treatment was performed at 120°C to obtain a negative electrode web. The negative electrode web was rolled by roll pressing to obtain a negative electrode having a negative electrode mixed material layer density of 1.75 g/cm$^3$.

<Preparation of separator>

A separator made of a single layer of polypropylene (produced by Celgard, LLC.; product name: Celgard 2500) was prepared as a separator formed of a separator substrate.

<Production of lithium ion secondary battery>

The obtained positive electrode was cut out as a rectangle of 49 cm × 5 cm and was placed with the surface at the positive electrode mixed material layer-side facing upward. The separator was cut out as 120 cm × 5.5 cm and was arranged on the positive electrode mixed material layer such that the positive electrode was positioned at a left side of the separator in a longitudinal direction. In addition, the obtained negative electrode was cut out as a rectangle of 50 cm × 5.2 cm and was arranged on the separator such that the surface at the negative electrode mixed material layer-side faced toward the separator and such that the negative electrode was positioned at a right side of the separator in the longitudinal direction. The resultant laminate was wound by a winding machine to obtain a roll. This roll was enclosed in an aluminum packing case serving as a battery case, electrolyte solution (solvent: ethylene carbonate/diethyl carbonate/vinylene carbonate = 68.5/30/1.5 (volume ratio); electrolyte: $LiPF_6$ of 1 M in concentration) was injected such that no air remained, and an opening of the aluminum packing case was closed by heat sealing at 150°C to produce a wound lithium ion secondary battery having a capacity of 800 mAh.

The internal resistance of the obtained lithium ion secondary battery was evaluated. The result is shown in Table 1.

(Examples 2, 3, and 13)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that in production of the binder composition, the types and/or amounts of added monomers were changed such that the chemical composition (proportional content of each monomer unit) of the particulate polymer was as indicated in Tables 1 and 2. Evaluations were conducted in the same manner as in Example 1. The results are shown in Tables 1 and 2.

(Example 4)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that in production of the binder composition, the amount of sodium lauryl sulfate that was added into the reactor was changed from 0.15 parts to 0.10 parts, and the amount of sodium lauryl sulfate that was added into the emulsion vessel was changed from 0.45 parts to 0.50 parts. Evaluations were conducted in the same manner as in Example 1. The results are shown in Table 1.

(Example 5)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that in production of the binder composition, the amount of sodium lauryl sulfate that was added into the reactor was changed from 0.15 parts to 0.05 parts, and the amount of sodium lauryl sulfate that was added into the emulsion vessel was changed from 0.45 parts to 0.55 parts. Evaluations were conducted in the same manner as in Example 1. The results are shown in Table 1.

(Examples 6 to 9 and Comparative Examples 1 to 5)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 4 with the exception that in production of the binder composition, the types and/or amounts of added monomers were changed such that the chemical composition (proportional content of each monomer unit) of the particulate polymer was as indicated in Tables 1 to 3. Evaluations were conducted in the same manner as in Example 1. The results are shown in Tables 1 to 3.

(Example 10)

A binder composition, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that an aqueous solution of a polymer A was not added in production of the slurry composition for a positive electrode. Evaluations were conducted in the same manner as in Example 1. The results are shown in Table 2.

(Example 11)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that 0.6 parts (in terms of solid content) of the aqueous solution of the polymer A was used instead of 0.6 parts of carboxymethyl cellulose in production of the CNT dispersion liquid and in production of the acetylene black dispersion liquid. Evaluations were conducted in the same manner as in Example 1. The results are shown in Table 2.

(Example 12)

A binder composition, an aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that in production of the binder composition, the amount of sodium lauryl sulfate that was added into the reactor was changed from 0.15 parts to 0.30 parts, and the amount of sodium lauryl sulfate that was added into the emulsion vessel was changed from 0.45 parts to 0.30 parts. Evaluations were conducted in the same manner as in Example 1. The results are shown in Table 2.

(Example 14)

A binder composition, an aqueous solution of a polymer A, an acetylene black dispersion liquid, a slurry composition for a positive electrode, a positive electrode, a negative electrode, a separator, and a lithium ion secondary battery were prepared or produced in the same way as in Example 1 with the exception that a CNT dispersion liquid was not added in production of the slurry composition for a positive electrode. Evaluations were conducted in the same manner as in Example 1. The results are shown in Table 2.

(Example 15)

A binder composition, an aqueous solution of a polymer A, a CNT dispersion liquid, a slurry composition for a positive electrode, a positive electrode, a negative electrode, a separator, and a lithium ion secondary battery were prepared or produced in the same way as in Example 1 with the exception that an acetylene black dispersion liquid was not added in production of the slurry composition for a positive electrode. Evaluations were conducted in the same manner as in Example 1. The results are shown in Table 2.

(Examples 16 and 18)

A binder composition, an aqueous solution of a polymer A, an acetylene black dispersion liquid, a slurry composition for a positive electrode, a positive electrode, a negative electrode, a separator, and a lithium ion secondary battery were prepared or produced in the same way as in Example 4 with the exception that the types and/or amounts of added monomers were changed such that the chemical composition (proportional content of each monomer unit) of the particulate polymer was as indicated in Table 2 in production of the binder composition, a CNT dispersion liquid was not added in production of the slurry composition for a positive electrode, and 0.6 parts (in terms of solid content) of the aqueous solution of the polymer A was used instead of 0.6 parts of carboxymethyl cellulose in production of the acetylene black dispersion liquid. Evaluations were conducted in the same manner as in Example 1. The results are shown in Table 2.

(Example 17)

A binder composition, an acetylene black dispersion liquid, a slurry composition for a positive electrode, a positive electrode, a negative electrode, a separator, and a lithium ion secondary battery were prepared or produced in the same way as in Example 4 with the exception that the types and/or amounts of added monomers were changed such that the chemical composition (proportional content of each monomer unit) of the particulate polymer was as indicated in Table 2 in production of the binder composition, a CNT dispersion liquid was not added in production of the slurry composition for a positive electrode, and an aqueous solution of a polymer A was not added in production of the slurry composition for a positive electrode. Evaluations were conducted in the same manner as in Example 1. The results are shown in Table 2.

(Comparative Example 6)

An aqueous solution of a polymer A, a CNT dispersion liquid, an acetylene black dispersion liquid, a slurry composition for a positive electrode, a positive electrode, a negative electrode, a separator, and a lithium ion secondary battery were prepared or produced in the same way as in Example 1 with the exception that a binder composition produced as described below was used. Evaluations were conducted in the same manner as in Example 1. The results are shown in Table 3.

<Production of binder composition>

A 1 L septum-equipped flask (reactor) including a stirrer was charged with 80 parts of deionized water and 0.15 parts of sodium lauryl sulfate as an emulsifier. The gas phase was purged with nitrogen gas, and the temperature was raised to 67°C. Thereafter, a solution of 0.1 parts of potassium persulfate (KPS) as a polymerization initiator dissolved in 10 parts of deionized water was added into the reactor.

Meanwhile, a monomer composition was obtained in a separate vessel (emulsion vessel) by mixing 80 parts of deionized water, 0.45 parts of sodium lauryl sulfate as an emulsifier, 75 parts of n-butyl acrylate as a (meth)acrylic acid ester monomer, 22 parts of styrene, 2 parts of itaconic acid as an acidic group-containing monomer, and 1 part of 2-hydroxyethyl acrylate as a hydroxy group-containing monomer. The monomer composition was continuously added into the 1 L septum-equipped flask over 3 hours to perform polymerization. During addition, the reaction was performed with the temperature held at 70°C. Once the addition was complete, a further 2 hours of stirring was performed at 80°C to yield a water dispersion of a particulate polymer. The water dispersion of the particulate polymer obtained in this manner was adjusted to pH 8 through addition of 5% sodium hydroxide aqueous solution to produce a binder composition.

In Tables 1 to 3, shown below:

"BA" indicates n-butyl acrylate unit;
"2-EHA" indicates 2-ethylhexyl acrylate unit;
"IA" indicates itaconic acid unit;
"MAA" indicates methacrylic acid unit;
"β-HEA" indicates 2-hydroxyethyl acrylate unit;
"AN" indicates acrylonitrile unit;
"AMA" indicates allyl methacrylate unit;
"LFP" indicates olivine-type lithium iron phosphate;
"CMC" indicates carboxymethyl cellulose;
"ACR" indicates polymer A;
"CNT" indicates carbon nanotubes;
"ACB" indicates acetylene black; and
"Tensile stress" indicates tensile stress at 100% elongation of dry thin film.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Slurry composition | Binder composition | Particulate polymer | (Meth)acrylic acid ester monomer unit — Type | BA | 2-EHA | BA | BA | BA | BA | BA | BA |
| | | | (Meth)acrylic acid ester monomer unit — Proportional content [mass%] | 75 | 75 | 70 | 75 | 75 | 80 | 60 | 67 |
| | | | Styrene unit — Proportional content [mass%] | 22 | 22 | 24 | 22 | 22 | 17 | 20 | 30 |
| | | | Acidic group-containing monomer unit — Type | IA | IA | IA | IA | IA | IA | IA | IA |
| | | | Acidic group-containing monomer unit — Proportional content [mass%] | 2 | 2 | 2 | 2 | 2 | 2 | 2 | 2 |
| | | | Acidic group-containing monomer unit — Type | - | - | MAA | - | - | - | - | - |
| | | | Acidic group-containing monomer unit — Proportional content [mass%] | - | - | 3 | - | - | - | - | - |
| | | | Other repeating units — Type | β-HEA | β-HEA | β-HEA | β-HEA | β-HEA | β-HEA | β-HEA | β-HEA |
| | | | Other repeating units — Proportional content [mass%] | 1 | 1 | 1 | 1 | 1 | 1 | 1 | 1 |
| | | | Other repeating units — Type | - | - | - | - | - | - | AN | - |
| | | | Other repeating units — Proportional content [mass%] | - | - | - | - | - | - | 17 | - |
| | | | Volume-average particle diameter [nm] | 93 | 100 | 100 | 130 | 200 | 130 | 120 | 120 |
| | | Tensile stress [MPa] | | 4 | 7 | 8 | 4 | 4 | 1.5 | 10 | 8 |
| | | Maximum elongation [%] | | 550 | 400 | 330 | 550 | 550 | 600 | 300 | 320 |
| | Positive electrode active material — Type | | | LFP | LFP | LFP | LFP | LFP | LFP | LFP | LFP |
| | Water-soluble polymer — Type | | | CMC + ACR | CMC + ACR | CMC + ACR | CMC + ACR | CMC + ACR | CMC + ACR | CMC + ACR | CMC + ACR |
| | Conductive material — Type | | | CNT + ACB | CNT + ACB | CNT + ACB | CNT + ACB | CNT + ACB | CNT + ACB | CNT + ACB | CNT + ACB |

(continued)

| | | Example 1 | Example 2 | Example 3 | Example 4 | Example 5 | Example 6 | Example 7 | Example 8 |
|---|---|---|---|---|---|---|---|---|---|
| Evaluation | Dispersibility | A | A | A | A | A | A | A | A |
| | Degree of swelling in electrolyte solution | A | A | A | A | A | B | B | A |
| | Peel strength | A | B | B | A | B | A | B | B |
| | Internal resistance | A | A | A | A | B | B | A | A |

[Table 2]

| | | | | | | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|---|
| Slurry composition | Binder composition | Particulate polymer | (Meth)acrylic acid ester monomer unit | Type | | BA | BA | BA | BA | BA | BA | BA | BA | BA | BA |
| | | | | Proportional content [mass%] | | 80 | 75 | 75 | 75 | 72 | 75 | 75 | 79 | 79 | 79 |
| | | | Styrene unit | Proportional content [mass%] | | 10 | 22 | 22 | 22 | 20 | 22 | 22 | 17.5 | 17.5 | 18.5 |
| | | | Acidic group-containing monomer unit | Type | | IA | IA | IA | IA | IA | IA | IA | IA | IA | IA |
| | | | | Proportional content [mass%] | | 2 | 2 | 2 | 2 | 7 | 2 | 2 | 2.5 | 2.5 | 2.5 |
| | | | | Type | | - | - | - | - | - | - | - | - | - | - |
| | | | | Proportional content [mass%] | | - | - | - | - | - | - | - | - | - | - |
| | | | Other repeating units | Type | | β-HEA | β-HEA | β-HEA | β-HEA | β-HEA | β-HEA | β-HEA | β-HEA | β-HEA | - |
| | | | | Proportional content [mass%] | | 1 | 1 | 1 | 1 | 1 | 1 | 1 | 1 | 1 | - |
| | | | | Type | | AN | - | - | - | - | - | - | - | - | - |
| | | | | Proportional content [mass%] | | 7 | - | - | - | - | - | - | - | - | - |
| | | | Volume-average particle diameter [nm] | | | 120 | 93 | 93 | 60 | 100 | 93 | 93 | 130 | 130 | 135 |
| | | Tensile stress [MPa] | | | | 2 | 4 | 4 | 5 | 7 | 4 | 4 | 2.5 | 2.5 | 2 |
| | | Maximum elongation [%] | | | | 750 | 550 | 550 | 480 | 360 | 550 | 550 | 590 | 590 | 550 |
| | Positive electrode active material | | | Type | | LFP | LFP | LFP | LFP | LFP | LFP | LFP | LFP | LFP | LFP |
| | Water-soluble polymer | | | Type | | CMC + ACR | CMC | ACR | CMC + ACR | CMC + ACR | CMC + ACR | CMC + ACR | ACR | CMC | ACR |

26

(continued)

| | | | Example 9 | Example 10 | Example 11 | Example 12 | Example 13 | Example 14 | Example 15 | Example 16 | Example 17 | Example 18 |
|---|---|---|---|---|---|---|---|---|---|---|---|---|
| | Conductive material | Type | CNT + ACB | CNT + ACB | CNT + ACB | CNT + ACB | CNT + ACB | ACB | CNT | ACB | ACB | ACB |
| Evaluation | Dispersibility | | A | A | B | A | C | A | A | A | A | A |
| | Degree of swelling in electrolyte solution | | B | A | A | A | A | A | A | A | A | A |
| | Peel strength | | A | B | A | C | B | A | A | A | A | B |
| | Internal resistance | | B | A | A | A | A | A | A | A | A | A |

[Table 3]

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| composition | Binder composition | Particulate polymer | (Meth)acrylic acid ester monomer unit | Type | BA | BA | BA | BA | BA | BA |
| | | | | Proportional content [mass%] | 85 | 45 | 60 | 80 | 75 | 75 |
| | | | Styrene unit | Proportional content [mass%] | 12 | 30 | 35 | 5 | 20 | 22 |
| | | | Acidic group-containing monomer unit | Type | IA | IA | IA | IA | IA | IA |
| | | | | Proportional content [mass%] | 2 | 2 | 2 | 2 | 2 | 2 |
| | | | | Type | - | - | - | - | - | - |
| | | | | Proportional content [mass%] | - | - | - | - | - | - |
| | | | Other repeating units | Type | β-HEA | β-HEA | β-HEA | β-HEA | β-HEA | β-HEA |
| | | | | Proportional content [mass%] | 1 | 1 | 1 | 1 | 1 | 1 |
| | | | | Type | - | AN | AN | AN | AMA | - |
| | | | | Proportional content [mass%] | - | 22 | 2 | 12 | 2 | - |
| | | | Volume-average particle diameter [nm] | | 120 | 120 | 120 | 120 | 120 | 100 |
| | | Tensile stress [MPa] | | | 2 | 15 | 11 | 5 | 12 | 11 |
| | | Maximum elongation [%] | | | 770 | 150 | 280 | 530 | 140 | 280 |
| | Positive electrode active material | | | Type | LFP | LFP | LFP | LFP | LFP | LFP |
| | Water-soluble polymer | | | Type | CMC + ACR | CMC + ACR | CMC + ACR | CMC + ACR | CMC + ACR | CMC + ACR |
| | Conductive material | | | Type | CNT + ACB | CNT + ACB | CNT + ACB | CNT + ACB | CNT + ACB | CNT + ACB |

EP 4 629 343 A1

28

(continued)

| Evaluation | | Comparative Example 1 | Comparative Example 2 | Comparative Example 3 | Comparative Example 4 | Comparative Example 5 | Comparative Example 6 |
|---|---|---|---|---|---|---|---|
| Evaluation | Dispersibility | D | A | A | D | A | A |
| | Degree of swelling in electrolyte solution | C | A | A | D | A | A |
| | Peel strength | A | D | D | A | D | D |
| | Internal resistance | D | D | D | D | C | C |

It can be seen from Tables 1 to 3 that the degree of swelling in electrolyte solution of a particulate polymer was reduced and that an electrode having excellent peel strength could be produced in Examples 1 to 18 in which the used binder composition contains a particulate polymer having a specific chemical composition and results in tensile stress at 100% elongation of a dry thin film being 10 MPa or less and maximum elongation of the dry thin film being 300% or more.

In contrast, it can be seen that the degree of swelling in electrolyte solution of a particulate polymer was increased in Comparative Examples 1 and 4 in which the used binder composition contains a particulate polymer that does not have the specific chemical composition.

It can also be seen that peel strength of an electrode was reduced in Comparative Examples 2 and 3 in which the used binder composition contains a particulate polymer that does not have the specific chemical composition and results in tensile stress at 100% elongation of a dry thin film being more than 10 MPa and maximum elongation of the dry thin film being less than 300%.

It can also be seen that peel strength of an electrode was reduced in Comparative Examples 5 and 6 in which the used binder composition results in tensile stress at 100% elongation of a dry thin film being more than 10 MPa and maximum elongation of the dry thin film being less than 300%.

INDUSTRIAL APPLICABILITY

According to the present disclosure, it is possible to provide a binder composition for a non-aqueous secondary battery electrode that contains a particulate polymer restricted from excessively swelling in electrolyte solution and that can form an electrode having excellent peel strength.

Moreover, according to the present disclosure, it is possible to provide a slurry composition for a non-aqueous secondary battery positive electrode that contains a particulate polymer restricted from excessively swelling in electrolyte solution and that can form a positive electrode having excellent peel strength.

Furthermore, according to the present disclosure, it is possible to provide a positive electrode for a non-aqueous secondary battery that has excellent peel strength and a non-aqueous secondary battery that includes this positive electrode.

**Claims**

1. A binder composition for a non-aqueous secondary battery electrode comprising a particulate polymer, wherein

   the particulate polymer includes a (meth)acrylic acid ester monomer unit in a proportion of not less than 50 mass% and not more than 83 mass% and includes a styrene unit in a proportion of not less than 7 mass% and not more than 33 mass%, and
   in tensile testing of a dry thin film formed using the binder composition for a non-aqueous secondary battery electrode, tensile stress at 100% elongation of the dry thin film is 10 MPa or less and maximum elongation of the dry thin film is 300% or more.

2. The binder composition for a non-aqueous secondary battery electrode according to claim 1, wherein the particulate polymer has a volume-average particle diameter of not less than 70 nm and not more than 200 nm.

3. The binder composition for a non-aqueous secondary battery electrode according to claim 1, wherein the particulate polymer further includes an acidic group-containing monomer unit in a proportion of not less than 1 mass% and not more than 6 mass%.

4. A slurry composition for a non-aqueous secondary battery positive electrode comprising: the binder composition for a non-aqueous secondary battery electrode according to claim 1; and a positive electrode active material.

5. The slurry composition for a non-aqueous secondary battery positive electrode according to claim 4, wherein the positive electrode active material includes olivine-type lithium iron phosphate.

6. The slurry composition for a non-aqueous secondary battery positive electrode according to claim 4, further comprising a water-soluble polymer.

7. The slurry composition for a non-aqueous secondary battery positive electrode according to claim 4, further comprising a conductive material, wherein
   the conductive material includes either or both of one or more carbon nanotubes and a particulate conductive material.

8. A positive electrode for a non-aqueous secondary battery comprising a positive electrode mixed material layer formed using the slurry composition for a non-aqueous secondary battery positive electrode according to any one of claims 4 to 7.

9. A non-aqueous secondary battery comprising the positive electrode for a non-aqueous secondary battery according to claim 8.

## INTERNATIONAL SEARCH REPORT

| International application No. |
|---|
| **PCT/JP2023/040629** |

**A.    CLASSIFICATION OF SUBJECT MATTER**

*H01M 4/62*(2006.01)i; *C08F 220/10*(2006.01)i; *H01M 4/136*(2010.01)i; *H01M 4/1397*(2010.01)i
FI:    H01M4/62 Z; H01M4/1397; H01M4/136; C08F220/10

According to International Patent Classification (IPC) or to both national classification and IPC

**B.    FIELDS SEARCHED**

Minimum documentation searched (classification system followed by classification symbols)

H01M4/62; C08F220/10; H01M4/136; H01M4/1397

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2017/155059 A1 (ZEON CORP) 14 September 2017 (2017-09-14)<br>claim 1, paragraph [0043], example 2, table 1 | 1-9 |
| Y | KR 10-2012-0039473 A (LG CHEM. LTD.) 25 April 2012 (2012-04-25)<br>example 3, table 1 | 1-9 |
| Y | JP 2006-134777 A (EREKUSERU KK) 25 May 2006 (2006-05-25)<br>claim 1, paragraphs [0033]-[0034], example 1 | 4-9 |
| A | WO 2020/137434 A1 (ZEON CORP) 02 July 2020 (2020-07-02)<br>entire text, all drawings | 1-9 |
| A | WO 2020/137435 A1 (ZEON CORP) 02 July 2020 (2020-07-02)<br>entire text, all drawings | 1-9 |
| A | WO 2019/087827 A1 (ZEON CORP) 09 May 2019 (2019-05-09)<br>entire text, all drawings | 1-9 |

☑ Further documents are listed in the continuation of Box C.        ☑ See patent family annex.

| | |
|---|---|
| \*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **11 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/040629**

### C.    DOCUMENTS CONSIDERED TO BE RELEVANT

| Category* | Citation of document, with indication, where appropriate, of the relevant passages | Relevant to claim No. |
|---|---|---|
| A | JP 2012-256541 A (ZEON CORP) 27 December 2012 (2012-12-27)<br>entire text, all drawings | 1-9 |
| A | JP 2017-123264 A (ZEON CORP) 13 July 2017 (2017-07-13)<br>entire text, all drawings | 1-9 |
| A | JP 2006-513554 A (LG CHEM. LTD.) 20 April 2006 (2006-04-20)<br>entire text, all drawings | 1-9 |
| A | WO 2018/061622 A1 (ZEON CORP) 05 April 2018 (2018-04-05)<br>entire text, all drawings | 1-9 |
| A | JP 2014-149968 A (NICCA CHEMICAL CO LTD) 21 August 2014 (2014-08-21)<br>entire text, all drawings | 1-9 |

INTERNATIONAL SEARCH REPORT
Information on patent family members

International application No.

**PCT/JP2023/040629**

| Patent document cited in search report | | | Publication date (day/month/year) | Patent family member(s) | | | Publication date (day/month/year) |
|---|---|---|---|---|---|---|---|
| WO | 2017/155059 | A1 | 14 September 2017 | US | 2019/0097235 | A1 | |
| | | | | claim 1, paragraph [0076], example 2, table 1 | | | |
| | | | | EP | 3429001 | A1 | |
| | | | | CN | 108701833 | A | |
| KR | 10-2012-0039473 | A | 25 April 2012 | (Family: none) | | | |
| JP | 2006-134777 | A | 25 May 2006 | US | 2006/0222952 | A1 | |
| | | | | claim 1, paragraphs [0040]-[0041], example 1 | | | |
| | | | | EP | 1655798 | A1 | |
| WO | 2020/137434 | A1 | 02 July 2020 | US | 2022/0045360 | A1 | |
| | | | | entire text, all drawings | | | |
| | | | | EP | 3904406 | A1 | |
| WO | 2020/137435 | A1 | 02 July 2020 | US | 2022/0045329 | A1 | |
| | | | | entire text, all drawings | | | |
| | | | | EP | 3904405 | A1 | |
| WO | 2019/087827 | A1 | 09 May 2019 | US | 2021/0111408 | A1 | |
| | | | | entire text, all drawings | | | |
| | | | | EP | 3706216 | A1 | |
| JP | 2012-256541 | A | 27 December 2012 | (Family: none) | | | |
| JP | 2017-123264 | A | 13 July 2017 | (Family: none) | | | |
| JP | 2006-513554 | A | 20 April 2006 | US | 2006/0058462 | A1 | |
| | | | | entire text, all drawings | | | |
| | | | | EP | 1599912 | A1 | |
| WO | 2018/061622 | A1 | 05 April 2018 | US | 2019/0190008 | A1 | |
| | | | | entire text, all drawings | | | |
| | | | | EP | 3522273 | A1 | |
| JP | 2014-149968 | A | 21 August 2014 | (Family: none) | | | |

Form PCT/ISA/210 (patent family annex) (July 2022)

**EP 4 629 343 A1**

**Patent documents cited in the description**

- JP 2011243464 A

- JP 2012204303 A